# EUROPEAN PATENT SPECIFICATION

(11) **EP 3 530 514 B1**
(45) Date of publication and mention of the grant of the patent: **02.03.2022**
(21) Application number: 17862361.7
(22) Date of filing: 12.10.2017
(51) Int. Cl.: B60L 9/18, B61C 3/00, B61C 17/00, H02J 7/00, B60L 9/28, B60L 50/60

(54) **ELECTRIC MOTOR POWER SYSTEM, AND ELECTRIC VEHICLE**
STROMVERSORGUNGSSYSTEM FÜR ELEKTROMOTOR UND ELEKTROFAHRZEUG
SYSTÈME D'ALIMENTATION DE MOTEUR ÉLECTRIQUE, ET VÉHICULE ÉLECTRIQUE

(30) Priority: 18.10.2016 JP 2016204442
(43) Date of publication of application: 28.08.2019
(73) Proprietor: Hitachi, Ltd., Tokyo 100-8280 (JP)
(72) Inventor: NAGAURA, Yasuhiro, Tokyo 100-8280 (JP); KANEKO, Takashi, Tokyo 100-8280 (JP); TERAKADO, Shuichi, Tokyo 100-8280 (JP); YAMAMOTO, Taku, Tokyo 100-8280 (JP)
(74) Representative: Mewburn Ellis LLP
(86) International application number: PCT/JP2017/037061
(87) International publication number: WO 2018/074329

(56) References cited:
- EP-A1- 2 787 624
- JP-A- 2011 018 729
- JP-A- 2013 048 151
- JP-A- 2014 064 397
- JP-A- 2016 010 306
- JP-A- 2016 106 518
- US-A1- 2012 000 739

## Description

### Technical Field

The present invention relates to a power system for driving a main motor.

### Background Art

As a power system for storage battery electric railcar, for example, there is proposed a power system for storage battery electric railcar that includes a main conversion circuit connected to a secondary winding of a main transformer to supply a driving power to a main motor and a conversion circuit for auxiliary machine connected to a tertiary winding of the main transformer to supply an electric power to auxiliary machines (see Patent Literature 1). As a power system for storage battery electric railcar from which the tertiary winding of the main transformer is eliminated, there is proposed a power system for storage battery electric railcar that connects a static inverter supplying an electric power to auxiliary machines to a DC stage of a main conversion circuit including a converter and an inverter and connects a battery to the DC stage of the main conversion circuit via a bidirectional chopper (see Patent Literature 2). The main conversion circuit is connected to a secondary winding of a main transformer to supply a driving power to a main motor.

### Citation List

### Patent Literature

Patent Literature 1: Japanese Unexamined Patent Application Publication No. 2014-64397
Patent Literature 2: Japanese Unexamined Patent Application Publication No. 2014-64398
EP A1 2787624 proposes a forced-air-cooled power conversion device.
US 2012/000739 proposes a system for preventing an excitation inrush current of a main transformer.

### Summary of Invention

### Technical Problem

In the above-described patent literatures, there is no disclosure regarding that a cooler cools, for example, semiconductor elements that belong to a main conversion circuit.

The object of the present invention relates that a cooler effectively cools a converter that converts an AC power into a DC power and an inverter that converts the DC power from the converter into a three-phase AC power.

### Solution to Problem

The present invention provides an electric motor power system according to claim 1.

### Advantageous Effects of Invention

According to the present invention, bias in temperatures of the converter and the inverter can be reduced, and cooling can be effectively performed by the cooler. For example, when the inverter is stopped, the cooler can be fully utilized to cool the converter while a storage battery is being charged.

### Brief Description of Drawings

Fig. 1 is a main part block diagram of a power system for storage battery electric railcar according to an embodiment.
Fig. 2 is a perspective view of a converter-inverter according to the embodiment.
Fig. 3 is a perspective view of a power unit and a cooler according to the embodiment.
Fig. 4 is a schematic diagram of an arrangement of elements belonging to a power unit according to the embodiment.
Fig. 5 is an overall configuration of the power system for storage battery electric railcar according to the embodiment.

### Description of Embodiments

An embodiment discloses an electric motor power system that includes a converter-inverter and a cooler. The converter-inverter includes one or more converters and one or more inverters. The one or more converters convert an AC power into a DC power. The one or more inverters convert the DC power output by the converter into a three-phase AC power. The one or more inverters output the three-phase AC power to a main motor. The converter-inverter has a DC circuit to which a storage battery is connected. The DC circuit links the converter and the inverter. The cooler cools the converter and the inverter. An element group belonging to the converter is disposed divided into a plurality of blocks with an element group belonging to the inverter provided therebetween.

The embodiment discloses the electric motor power system in which the converter charges the storage battery when a power conversion operation by the inverter stops.

The embodiment discloses an electric motor power system including a converter-inverter, a cooler, and a control unit. The converter-inverter includes one or more converters and one or more inverters. The one or more converters convert an AC power into a DC power. The one or more inverters convert the DC power output by the converter into a three-phase AC power. The one or more inverters output the three-phase AC power to a main motor. The cooler cools the converter and the inverter. The control unit controls an operation of the converter-inverter. The element group belonging to the converter is disposed divided into a plurality of blocks with an element group belonging to the inverter provided therebetween. When each of the main motors is driven, a power conversion operation by the converter and a power conversion operation by the inverter are each executed.

The embodiment discloses an electric motor power system including a converter-inverter, a cooler, and a control unit. The converter-inverter includes one or more converters and one or more inverters. The one or more converters convert an AC power into a DC power. The one or more inverters convert the DC power output by the converter into a three-phase AC power. The one or more inverters output the three-phase AC power to a main motor. The cooler cools the converter and the inverter. The control unit controls an operation of the converter-inverter. The element group belonging to the converter is disposed divided into a plurality of blocks with an element group belonging to the inverter provided therebetween. When an operation of each of the main motors is stopped, a power conversion operation by the converter is executed, and a power conversion operation by the inverter is stopped.

The embodiment discloses an electric motor power system that includes a control unit that controls an operation of the converter-inverter.

The embodiment discloses that the converter and the inverter are disposed on an identical substrate.

The following describes novel features and effects of the present invention described above and another with reference to the drawings. The drawings are used exclusively for understanding the invention, and they do not limit and reduce a claimed range.

### (Embodiment)

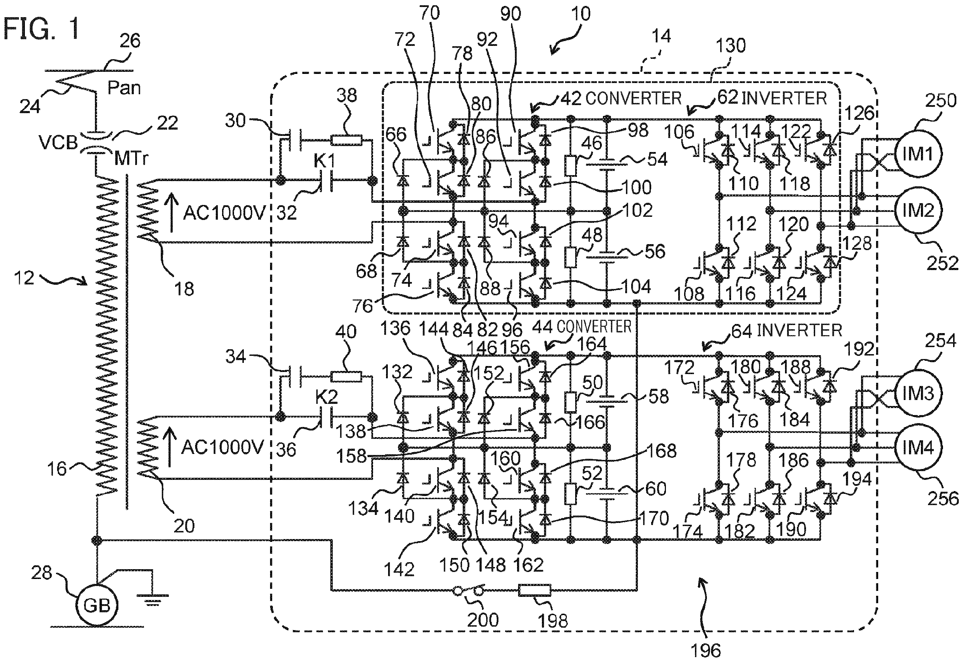

Fig. 1 is a main part block diagram of a power system for storage battery electric railcar according to the embodiment. A power system 10 for storage battery electric railcar includes a main transformer 12 and a converter-inverter 14 in Fig. 1. The main transformer 12 includes a primary winding 16 and a plurality of secondary windings 18 and 20. The primary winding 16 has one end connected to a vacuum circuit breaker (VCB) 22 and an overhead line (AC 20 kV, 60 Hz) 26 via a pantograph 24. The other end of the primary winding 16 is grounded via a ground brush 28 of a wheel. The secondary windings 18 and 20 are each connected to the converter-inverter 14.

The converter-inverter 14 is configured by including a plurality of contact makers 30, 32, 34, and 36, resistors 38 and 40, converters 42 and 44, resistors 46, 48, 50, and 52, condensers 54, 56, 58, and 60, and inverters 62 and 64. In this respect, the contact makers 30 and 32 and the resistor 38 are configured as a charging circuit. The contact makers 34 and 36 and the resistor 40 are configured as a charging circuit. Opening and closing of the contact makers 30, 32, 34, and 36 are controlled by a controller (not illustrated) for controlling the converters 42 and 44 and the inverters 62 and 64. The controller is configured of a computer device including information processing resources, such as a CPU (Central Processing Unit), a memory, and an input/output interface as a control unit.

The converter 42 includes diodes 66 and 68, IGBT (Insulated Gate Bipolar Transistors) 70, 72, 74, and 76, diodes 78, 80, 82, 84, 86, and 88, IGBTs 90, 92, 94, and 96, and diodes 98, 100, 102, and 104. The converter 42 is configured as a power convertor that converts an AC power from the secondary winding 18 to the DC power. The inverter 62 includes IGBTs 106 and 108, diodes 110 and 112, IGBTs 114 and 116, diodes 118 and 120, IGBTs 122 and 124, and diodes 126 and 128. The inverter 62 is configured as a power convertor that converts the DC power output by the converter 42 into a three-phase AC power. In this respect, the converter 42, the resistors 46 and 48, the condensers 54 and 56, and the inverter 62 configure a circuit of a power unit 130. The power unit 130 includes a cooler (not illustrated). While the resistors 46 and 48 configure the circuit of the power unit 130, the resistors 46 and 48 are arranged outside a housing of the power unit 130. Instead of IGBT, MOSFET (Metal-Oxide-Semiconductor Field-Effect Transistor) may be employed.

The converter 44 includes diodes 132 and 134, IGBTs 136, 138, 140, and 142, diodes 144, 146, 148, 150, 152, and 154, IGBTs 156, 158, 160, and 162, and diodes 164, 166, 168, and 170. The converter 44 is configured as a power convertor that converts an AC power from the secondary winding 20 into a DC power. The inverter 64 includes IGBTs 172 and 174, diodes 176 and 178, IGBTs 180 and 182, diodes 184 and 186, IGBTs 188 and 190, and diodes 192 and 194. The inverter 64 is configured as a power convertor that converts the DC power output by the converter 44 into a three-phase AC power. In this respect, the converter 44, the resistors 50 and 52, the condensers 58 and 60, and the inverter 64 configure a circuit of a power unit 196. The power unit 196 includes a cooler (not illustrated) . Ground sides of the converter 42 and the converter 44 and ground sides of the inverters 62 and 64 are connected to the ground brush 28 via a resistor 198 and a ground switch (GS) 200.

The inverter 62 has an output side (U-phase, V-phase, and W-phase) connected to a plurality of main motors (three-phase induction motor) 250 and 252 for rotating the wheels. The inverter 64 has an output side (U-phase, V-phase, and W-phase) connected to a plurality of main motors (three-phase induction motor) 254 and 256 for rotating the wheels.

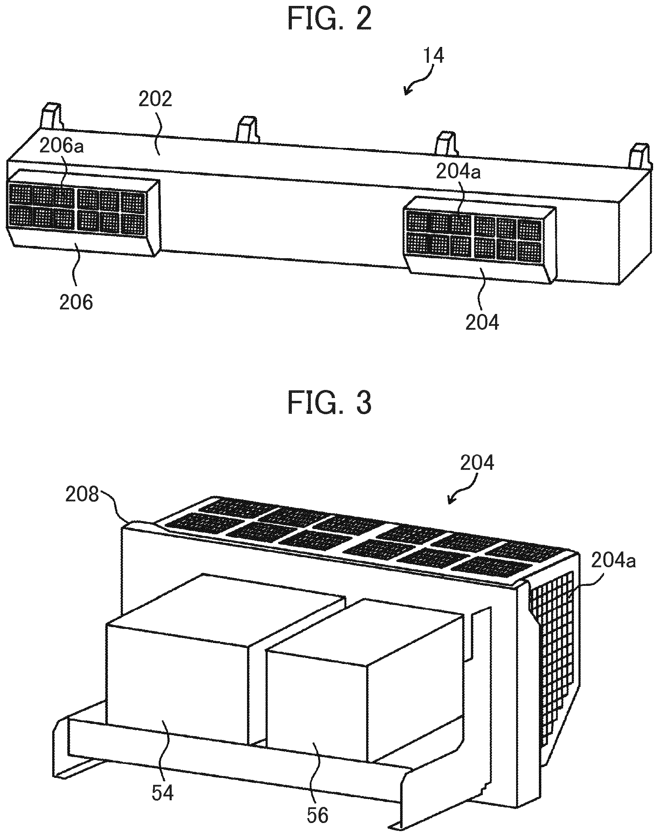

Fig. 2 is a perspective view of the converter-inverter according to the embodiment. In Fig. 2, on a main body housing 202 of the converter-inverter 14, coolers 204 and 206 are disposed separated on the right and left as elements that belong to the power units 130 and 196. Semiconductor elements and the like belonging to the power unit 130 (not illustrated) are provided between the cooler 204 and the main body housing 202. Semiconductor elements and the like belonging to the power unit 196 (not illustrated) are provided between the cooler 206 and the main body housing 202. The coolers 204 and 206 are configured of, for example, heat pipes. The semiconductor elements and the like belonging to the respective power units 130 and 196 can be cooled by the heat pipes. On the coolers 204 and 206, a plurality of air vents 204a and 206a are formed. Therefore, the semiconductor elements and the like belonging to the respective power units 130 and 196 can be cooled also by a traveling air when a vehicle on which the converter-inverter 14 is mounted travels.

Fig. 3 is a perspective view of the power unit and the cooler according to the embodiment. In Fig. 3, the cooler 204 has a back side on which a panel 208 for fixing the power unit 130 (not illustrated) is disposed. On the panel 208, the semiconductor elements and the like belonging to the power unit 130 is disposed and the condensers 54 and 56 belonging to the power unit 130 is fixed.

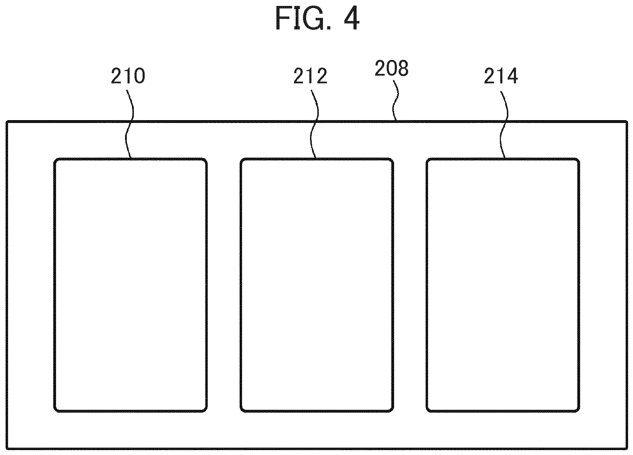

Fig. 4 is a schematic diagram of an arrangement of elements belonging to the power unit according to the embodiment. In Fig. 4, the panel 208 for mounting the elements has a U-phase converter arrangement area 210, an inverter arrangement area 212, and a V-phase converter arrangement area 214 are set as areas for disposing the elements belonging to the power unit 130. Areas for disposing the elements belonging to the power unit 196 are similarly set.

On the U-phase converter arrangement area 210, the diodes 66 and 68, the IGBTs 70, 72, 74, and 76, and the diodes 78, 80, 82, and 84 are disposed. On the inverter arrangement area 212, the IGBTs 106 and 108, the diodes 110 and 112, and the IGBTs 114 and 116, the diodes 118 and 120, the IGBTs 122 and 124, and the diodes 126 and 128 are disposed. On the V-phase converter arrangement area 214, the diodes 86 and 88, the IGBTs 90, 92, 94, and 96, and the diodes 98, 100, 102, and 104 are disposed. That is, an element group belonging to the converter 42 is disposed divided into a plurality of blocks (areas) with element group belonging to the inverter 62 provided therebetween, and the element group belonging to the converter 42 and the element group belonging to the inverter 62 are disposed on an identical substrate.

In this respect, with the inverter arrangement area 212 in the center, the U-phase converter arrangement area 210 and the V-phase converter arrangement area 214 are set on both sides of the inverter arrangement area 212. Therefore, the cooler 204 can be shared by the converter 42 and the inverter 62, and while the inverter 62 is stopped, a cooling energy of the cooler 204 can be used by the whole converter 42. In view of this, the whole converter 42 is cooled by the cooler 204 during the vehicle stop where the inverter 62 is stopped, and thus, a storage battery connected to the converter 42 can be rapidly charged. On the panel 208, the elements belonging to the power unit 130 are integrally disposed. Therefore, a housing wiring (conductor bar) inside a converter-inverter box linking the converter 42 is the inverter 62 is no longer necessary.

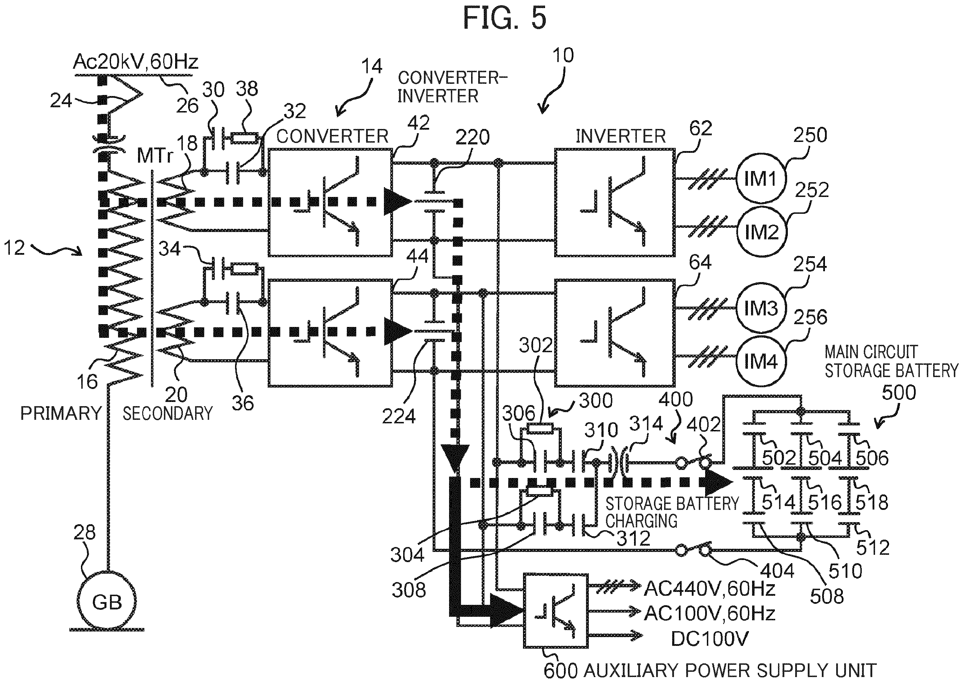

Fig. 5 is an overall configuration of the power system for storage battery electric railcar according to the embodiment. In the embodiment, a line breaker box 300, a disconnector 400, a main circuit storage battery 500, and an auxiliary power supply unit 600 are disposed besides the converter-inverter 14. The configuration of the converter-inverter 14 and the main transformer 12 are as illustrated in Fig. 1. The converters 42 and 44 have output sides connected to condensers 220 and 224.

The line breaker box 300 includes a plurality of resistors 302 and 304, and a plurality of contact makers 306, 308, 310, 312, and 314. The line breaker box 300 has input sides (one end sides of respective resistors 302 and 304) that are connected to DC circuits (DC stages) linking the respective converters 42 and 44 with the respective inverters 62 and 64. The line breaker box 300 has an output side (one end side of the contact maker 314) connected to the main circuit storage battery 500 via the disconnector 400. The disconnector 400 is configured of a switch 402 and a switch 404. The switch 402 has one end side connected to the contact maker 314 and the other end side connected to a high electric potential side of the main circuit storage battery 500. The switch 404 has one end side connected to a low electric potential side of the converter 44 and the other end side connected to a low electric potential side of the main circuit storage battery 500.

The main circuit storage battery 500 is configured of a plurality of contact makers 502, 504, 506, 508, 510, and 512, and a plurality of storage batteries 514, 516, and 518. The auxiliary power supply unit 600 is configured as an auxiliary power supply unit for supplying an electric power to the auxiliary machines (air conditioner and lighting system) . The auxiliary power supply unit 600 is, for example, configured of a static inverter that switches the input DC voltage with a semiconductor element and smooths the switched voltage with, for example, a condenser to output as an AC voltage.

Here, while traveling along the overhead line (power running), inverter consuming power and auxiliary machine consuming power are taken into the converter-inverter 14 from the overhead line 26 via the main transformer 12. The respective inverters 62 and 64 drive the respective main motors 250, 252, 254, and 256. The output powers of the respective converters 42 and 44 are supplied to the auxiliary machines via the auxiliary power supply unit 600. In this respect, the controller executes power conversion operations of the respective inverters 62 and 64 and the respective converters 42 and 44. The output powers of the respective converters 42 and 44 can charge the main circuit storage battery 500.

While traveling along the overhead line (regeneration), a regenerative electric power (regeneration energy) from each of the main motors 250, 252, 254, and 256 is taken into the converter-inverter 14 via the respective inverters 62 and 64. The taken regenerative electric power charges the main circuit storage battery 500 and the taken regenerative electric power is supplied to the auxiliary machines via the auxiliary power supply unit 600. After completion of charging, the regenerative electric power is regenerated to the overhead line.

While traveling along the overhead line (coasting/vehicle stop), the auxiliary machine consuming power and a storage battery charging power are taken into the converter-inverter 14 from the overhead line 26 via the main transformer 12. The output powers of the respective converters 42 and 44 charge the storage battery 500. The output powers of the respective converters 42 and 44 are supplied to the auxiliary machines via the auxiliary power supply unit 600. After completion of charging, operations of the respective converters 42 and 44 are stopped, and the power is fed from the main circuit storage battery 500 to the auxiliary machine via the auxiliary power supply unit 600.

While traveling using the storage battery (power running), the operations of the respective converters 42 and 44 are stopped. The electric power from the main circuit storage battery 500 is taken into the converter-inverter 14. The respective inverters 62 and 64 drive the respective main motors 250 to 256. The electric power from the main circuit storage battery 500 is supplied to the auxiliary machines via the auxiliary power supply unit 600. In this respect, the controller executes the power conversion operations of the respective inverters 62 and 64, and stops the power conversion operations of the respective converters 42 and 44.

While traveling using the storage battery (regeneration), the operations of the respective converters 42 and 44 are stopped. The regenerative electric power (regeneration energy) from each of the main motors 250 to 256 are taken into the converter-inverter 14 via the respective inverters 62 and 64. The taken regenerative electric power charges the main circuit storage battery 500 and the taken regenerative electric power is supplied to the auxiliary machines via the auxiliary power supply unit 600.

While traveling using the storage battery (coasting/vehicle stop), the operations of the respective converters 42 and 44 and the respective inverters 62 and 64 are stopped. The electric power from the main circuit storage battery 500 is supplied to the auxiliary machines via the auxiliary power supply unit 600.

With the embodiment, the converter-inverter can be cooled by effectively using a cooler. Specifically, the coolers 204 and 206 can be shared by the converters 42 and 44 and the inverters 62 and 64, and while the inverters 62 and 64 are stopped, the cooling energies of the coolers 204 and 206 can be used by the whole converters 42 and 44, thereby ensuring downsizing and weight reduction of the coolers 204 and 206. During the vehicle stop where the inverters 62 and 64 are stopped, the whole converters 42 and 44 are cooled by the coolers 204 and 206, and thus, the main circuit storage battery 500 connected to the converters 42 and 44 can be rapidly charged. The elements belonging to the power unit 130 (196) are integrally disposed on the panel 208. Therefore, wirings (conductor bar) inside the converter-inverter box linking the converters 42 and 44 with the inverters 62 and 64 are no longer necessary.

With the inverter arrangement area 212 in the center, the U-phase converter arrangement area 210 and the V-phase converter arrangement area 214 are set on both sides of the inverter arrangement area 212. Therefore, the elements and the like belonging to the inverters 62 and 64 that generates high heat in a low speed range (low in cooling performance) and generates low heat in a high speed range (high in cooling performance) are interposed between the elements and the like belonging to the converters 42 and 44 that generates low heat in a low speed range and generates high heat in a high speed range. Thus, the elements such as the semiconductor elements that belong to the power units 130 and 196 or a cooler element surface temperature can be leveled.

The present invention is not limited to above-described embodiment, and various modifications are included. For example, one set of converters and inverters each can configure one converter-inverter 14. The power units 130 and 196 can be integrated, and one cooler can cool the integrated power unit. In this respect, the element group belonging to the converter in the power unit can be disposed divided into a plurality of blocks with the element group belonging to the inverter provided therebetween. Furthermore, as the coolers 204 and 206, a water-cooling type can be employed instead of the heat pipe. A cooling fin (aluminum flat plate fin) can be disposed along a rail direction on the coolers 204 and 206. In this case, in order to obtain both self-cooling (direction of cooling air = gravity direction) and traveling air cooling (direction of cooling air = rail direction), it is necessary to install the cooling fin such that a normal direction of a surface of the cooling fin approximately faces a crosstie direction (for example, heat pipe type cooler) . When the temperature in the area between the inverter and the converter is leveled, for example, embedding all or a part of the heat pipe in the heat block along the rail direction ensures downsizing and reducing weight of the device and reducing the number of components. The above-described embodiment is a detailed description to describe the present invention to be easily understood, and it is not necessarily limited to include all the described configuration. It is possible to replace a part of configuration of a certain embodiment with a configuration of another embodiment, and it is also possible to add a configuration of another embodiment to a configuration of a certain embodiment. A configuration of another embodiment can be can be added, deleted, and replaced for a part of configuration of each embodiment. In addition to the storage battery electric railcar, the present invention is applicable to, for example, an electric motor power system that is a system driving the main motors 250 to 256 and includes a power unit that includes a cooler as a power source. Furthermore, the converter can also be driven by an AC power supply other than the overhead line.

### List of Reference Signs

- 10: power system for storage battery electric railcar
- 12: main transformer
- 14: converter-inverter
- 42, 44: converter
- 62, 64: inverter
- 130, 196: power unit
- 204, 206: cooler
- 250, 252, 254, 256: main motor

## Claims

1. An electric motor power system (10) comprising:
a converter-inverter (14) that includes one or more converters (42, 44) including a group of semiconductor elements and one or more inverters (62, 64) including a group of semiconductor elements, the converter converting an AC power into a DC power, the inverter converting the DC power output by the converter into a three-phase AC power, the inverter outputting the three-phase AC power to a main motor (250, 252, 254, 256), and the converter-inverter including a DC circuit linking the converters and the inverters; and
a respective cooler (204, 206) that cools the or each converter (42, 44) and the or each inverter (62, 64),
**characterized in that**:
the electric motor power system (10) further comprises a storage battery (500) which is connected to the DC circuit; and
in regard of the or each converter (42, 44) and the or each inverter (62, 64) cooled by the respective cooler (204, 206), the group of semiconductor elements belonging to the converter (42, 44) is divided into a plurality of areas (210, 214) with the group of semiconductor elements belonging to the inverter (62, 64) provided therebetween, the converter (42, 44) charging the storage battery (500) and the cooler (204, 206) cooling the converter when a power conversion operation by the inverter (62, 64) is stopped.

2. The electric motor power system (10) according to claim 1,
wherein, in regard of the or each converter (42, 44) and the or each inverter (62, 64) cooled by the respective cooler (204, 206), the converter (42, 44) and the inverter (62, 64) are disposed on the same substrate.

3. An electric vehicle comprising the electric motor power system (10) according to claim 1 or 2.

## Patentansprüche

1. Elektromotor-Leistungssystem (10), das Folgendes umfasst:
einen Wandler-Wechselrichter (14), der einen oder mehrere Wandler (42, 44), die eine Gruppe von Halbleiterelementen umfassen, und einen oder mehrere Wechselrichter (62, 64), die eine Gruppe von Halbleiterelementen umfassen, umfasst, wobei der Wandler Wechselstrom-Leistung in Gleichstrom-Leistung umwandelt, der Wechselrichter die vom Wandler ausgegebene Gleichstrom-Leistung in Dreiphasen-Wechselstrom-Leistung umwandelt, der Wechselrichter die Dreiphasen-Wechselstrom-Leistung an einen Hauptmotor (250, 252, 254, 256) ausgibt und der Wandler-Wechselrichter eine Gleichstrom-Schaltung aufweist, die die Wandler und die Wechselrichter miteinander verbindet; und
jeweils einen Kühler (204, 206), der den bzw. jeden Wandler (42, 44) und den bzw. jeden Wechselrichter (62, 64) kühlt,
**dadurch gekennzeichnet, dass**
das Elektromotor-Leistungssystem (10) ferner eine Speicherbatterie (500) umfasst, die mit der Gleichstrom-Schaltung verbunden ist; und
in Bezug auf den bzw. jeden Wandler (42, 44) und den bzw. jeden Wechselrichter (62, 64), der durch den jeweiligen Kühler (204, 206) gekühlt wird, die Gruppe von Halbleiterelementen, die zum Wandler (42, 44) gehört, in eine Vielzahl von Bereichen (210, 214) unterteilt ist, wobei die Gruppe von Halbleiterelementen, die zum Wechselrichter (62, 64) gehört, dazwischen bereitgestellt ist, wobei der Wandler (42, 44) die Speicherbatterie (500) auflädt und der Kühler (204, 206) den Wandler kühlt, wenn ein durch den Wechselrichter (62, 64) durchgeführter Leistungsumwandlungsvorgang angehalten wird.

2. Elektromotor-Leistungssystem (10) nach Anspruch 1, wobei in Bezug auf den bzw. jeden Wandler (42, 44) und den bzw. jeden Wechselrichter (62, 64), der durch den jeweiligen Kühler (204, 206) gekühlt wird, der Wandler (42, 44) und der Wechselrichter (62, 64) auf demselben Substrat angeordnet sind.

3. Elektrisches Fahrzeug, das das Elektromotor-Leistungssystem (10) nach Anspruch 1 oder 2 umfasst.

## Revendications

1. Système d'alimentation de moteur électrique (10), comprenant :
un convertisseur-onduleur (14) qui comprend un ou plusieurs convertisseurs (42, 44) comprenant un groupe d'éléments semi-conducteurs et un ou plusieurs onduleurs (62, 64) comprenant un groupe d'éléments semi-conducteurs, le convertisseur convertissant une alimentation en courant alternatif, CA, en une alimentation en courant continu, CC, l'onduleur délivrant en sortie l'alimentation CC fournie par le convertisseur en une alimentation CA triphasé, l'onduleur délivrant en sorte l'alimentation CA triphasé à un moteur principal (250, 252, 254, 256), et le convertisseur-onduleur comprenant un circuit CC reliant les convertisseurs et les onduleurs ; et
un refroidisseur respectif (204, 206) qui refroidit le ou chaque convertisseur (42, 44) et le ou chaque onduleur (62, 64),
**caractérisé en ce que** :
le système d'alimentation de moteur électrique (10) comprend en outre une batterie de stockage (500) qui est connectée au circuit CC ; et
en ce qui concerne le ou chaque convertisseur (42, 44) et le ou chaque onduleur (62, 64) refroidis par le refroidisseur respectif (204, 206), le groupe d'éléments semi-conducteurs appartenant au convertisseur (42, 44) est divisé en une pluralité de zones (210, 214) avec le groupe d'éléments semi-conducteurs appartenant à l'onduleur (62, 64) prévu entre ceux-ci, le convertisseur (42, 44) chargeant la batterie de stockage (500) et le refroidisseur (204, 206) refroidissant le convertisseur lorsqu'une opération de conversion de puissance par l'onduleur (62, 64) est arrêtée.

2. Système d'alimentation de moteur électrique (10) selon la revendication 1,
dans lequel, en ce qui concerne le ou chaque convertisseur (42, 44) et le ou chaque onduleur (62, 64) refroidis par le refroidisseur respectif (204, 206), le convertisseur (42, 44) et l'onduleur (62, 64) sont disposés sur le même substrat.

3. Véhicule électrique comprenant le système d'alimentation de moteur électrique (10) selon la revendication 1 ou 2.
